Europäisches Patentamt

European Patent Office

Office européen des brevets

(19)

(11) Numéro de publication : **0 599 693 A1**

# (12) DEMANDE DE BREVET EUROPEEN

(21) Numéro de dépôt : **93402775.6**

(22) Date de dépôt : **16.11.93**

(51) Int. Cl.⁵ : **H01P 11/00**

(30) Priorité : **24.11.92 FR 9214081**

(43) Date de publication de la demande :
**01.06.94 Bulletin 94/22**

(84) Etats contractants désignés :
**DE FR GB**

(71) Demandeur : **THOMSON-CSF**
**173, Boulevard Haussmann**
**F-75008 Paris (FR)**

(72) Inventeur : **Bois, Arnaud**
**Thomson-CSF,**
**SCPI,**
**BP 329**
**F-92402 Courbevoie (Cedex) (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

(54) **Procédé de fabrication d'un guide d'onde.**

(57) 1. Procédé de fabrication d'un guide d'onde ou d'une partie d'un guide d'onde à partir d'une pièce de fonderie (10), le guide d'onde comportant au moins une partie le long de laquelle deux parties de parois du guide d'onde, une première et une seconde doivent rester parallèles entre elles écartées l'une de l'autre d'une distance X avec un intervalle de tolérance x, l'intervalle de tolérance de fonderie sur la dimension X étant f, procédé caractérisé en ce que on conforme la pièce issue de fonderie avec l'une au moins de ses premières ou seconde parois comportant des reliefs (25,26) et en ce que l'on réduit ces reliefs par passe d'un outil poussé ou tracté parallèlement aux premières et secondes parois .

FIG.1

L'invention se situe dans le domaine des procédés de fabrication des guides d'ondes électromagnétiques. Elle est utilisable pour tout guide d'onde mais elle est particulièrement adaptée pour les guides non rectilignes en particulier certaines antennes conçues sous forme de guides rayonnants.

On sait qu'en raison des tolérances sur les dimensions, il a été renoncé à la fabrication de tels guides d'ondes obtenus directement par fonderie. Les tolérances de fonderie qui au mieux sont de l'ordre de JS 13 ou JS 14 ne permettent pas d'atteindre la précision de dimension requise pour un guide d'onde. Il est donc nécessaire d'usiner les fonderies pour les amener aux dimensions exactes souhaitées. Il en résulte un coût important. De même il a été essayé d'obtenir des guides directement de fonderie par des opérations de sélection des guides démoulés. Les taux de rebut de l'ordre de 70 % rendent l'opération peu rentable.

Le but de l'invention est de réaliser des guides d'onde à partir de pièce de fonderie. Elle vise à simplifier les opérations intermédiaires à réaliser entre le guide brut de fonderie et le guide terminé.

Pour cela il est prévu selon la présente invention de donner à la pièce de fonderie, une forme qui permettra par simple repoussage ou écrouissage de matière, un galetage ou un roulage éventuellement dans quelques cas une abrasion par un outil conformé ou un brochage, d'obtenir directement le guide terminé.

On sait qu'un guide d'onde est une sorte de tuyau dont la section transversale est par exemple un rectangle ou un cercle. L'invention sera ci-après décrite pour un guide de section rectangulaire mais les explications données permettront de transposer aisément à toute autre forme de guide. Les guides de section rectangulaire comportent un grand côté de longueur a et un petit côté de longueur b.

On cherche en général à obtenir un seul mode de propagation de l'onde, connu sous le nom de mode transverse TE 10. Dans ce but les longueurs a et b doivent vérifier la relation $b < \dfrac{\lambda}{2} < a$, expression dans laquelle $\lambda$ désigne la longueur d'onde de l'onde guidée. On prend en général a = $\lambda\sqrt{2}$ De plus afin de limiter les pertes dans le guide l'état de surface ne doit pas présenter des différences entre aspérités et creux supérieures à $\lambda/4$, condition limite, et en pratique on cherche à les limiter à $\lambda/8$ ou même $\lambda/10$. Ainsi pour un guide travaillant dans la bande des 20 GHz soit des longueurs d'onde de 15 mm, les différences entre creux et aspérités seront limités à 20 dixièmes ou mieux 15 dixièmes de mm.

Pour observer cette condition on va selon l'invention, par le moulage créer un état de surface comportant des creux et des bosses puis avec un outil repousser la matière des bosses dans les creux. Comme il s'agit de pièces longitudinales, les bosses et les creux auront la plupart du temps des formes longitudinales également. Il s'agira de rainures dont les sections droites pourront avoir des formes de trapèze, de triangles, de rectangles, d'ondulations. Les dimensions des creux et bosses seront maintenant explicités. Soit X la cote finale à obtenir avec un intervalle de tolérance x. Il s'agira par exemple du grand côté d'un guide d'onde rectangulaire. Dans cet exemple on admettra que la cote finale est obtenue par repoussement de matière. La cote X est une cote correspondant à une pièce femelle c'est à dire que si la cote réelle Xr est plus petite que X il faudra ôter ou repousser de la matière pour arriver à la cote X. Le repoussement de matière doit de façon connue être effectué sur une épaisseur minimale e de matière, l'intervalle de tolérance du fondeur est f. Avec ces désignations la cote minimum entre bosses en vis à vis, à donner au fondeur sera égale à

$$CF\ Mini = X + x - e - f$$

la cote maxi entre bosses sera par conséquent :

$$CF\ Maxi = X + x - e$$

Le procédé n'est applicable que si f > x. Dans le cas contraire cela signifierait qu'on peut se contenter d'une pièce brute de fonderie.

En résumé l'invention est relative à un procédé de fabrication d'un guide d'onde ou d'une partie d'un guide d'onde à partir d'une pièce de fonderie, le guide d'onde comportant au moins une partie le long de laquelle deux parties de parois du guide d'onde, une première et une seconde doivent rester parallèles entre elles écartées l'une de l'autre d'une distance X avec un intervalle de toérance x l'intervalle de tolérance de fonderie sur la dimension X étant f, procédé caractérisé en ce que on conforme la pièce issue de fonderie avec l'une au moins de ses premières ou seconde parois comportant des reliefs et en ce que l'on réduit ces reliefs par passe d'un outil poussé ou tracté parallèlement aux premières et secondes parois .

Dans le cas d'un guide rectangulaire les parties de parois devant rester parallèles entre elles sont constituées par les faces constituant les petits côtés du rectangle et/ou les faces constituants les grands côtés du rectangle. Dans le cas d'un guide circulaire les faces devant rester parallèles entre elles sont constituées par des parties de face diamétralement opposées, la dimension X étant alors le diamètre du guide. De préférence, de façon à réduire le prix du moule de fonderie les reliefs sont constitués par des bossages longitudinaux dont les lignes longitudinales sont parallèles aux parois. Les outils de réduction des bossages peuvent être comme indiqué plus haut tout outil connus dans l'art.

Des explications complémentaires quant à la définition des termes employés et un exemple particulier de réalisation seront donnés ci-après en référence aux dessins annexés dans lesquels :

- la figure 1, représente un exemple de pièce brute de fonderie destinée à former un guide d'onde ;

- les figures 2a à e, représentent des exemples non limitatifs de formes de bossages et rainures ;
- les figures 3a à 3e représentent des exemples d'outillage pour le traitement des pièces de fonderie ;
- les figures 4a et 4b, représentent des vues partielles de coupes transversales de deux exemples particuliers de réalisation ;
- la figure 5, est un grossissement d'une partie de la figure 4 destiné à expliquer les relations entre les dimensions des bossages et des rainures.

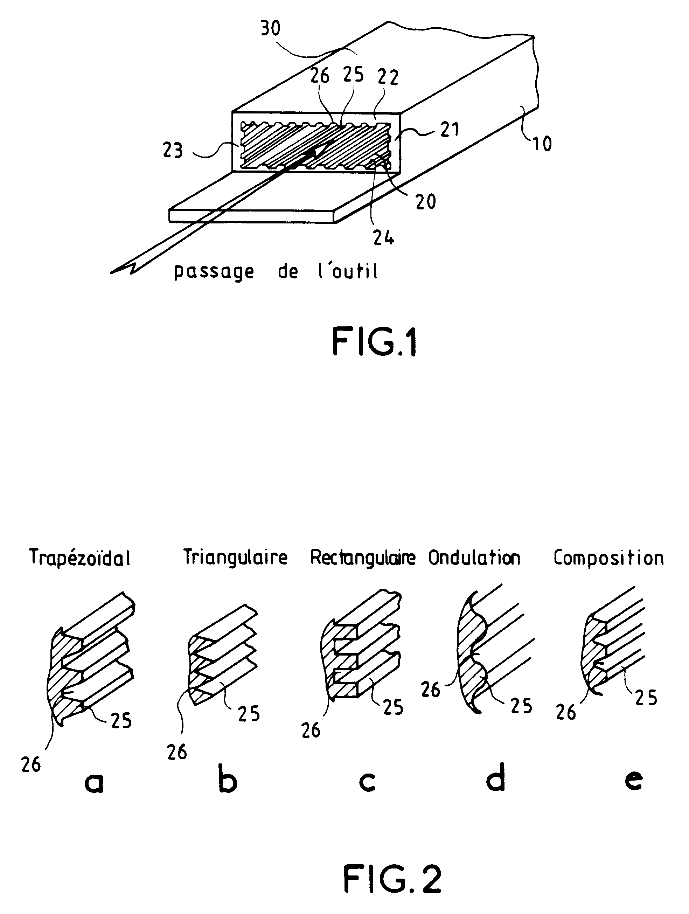

La figure 1, représente un exemple d'une pièce de fonderie 10 à partir de laquelle il est possible de réaliser un guide d'onde conforme à l'invention. Il s'agit d'une forme pour réaliser un guide d'onde rectangulaire. La pièce 10 est une pièce longitudinale ayant une surface externe 30 et une surface interne 20.

Pour ce qui intéresse l'invention la forme externe est sans importance. La forme de la surface interne 20 a été représentée avec ses quatres faces 21, 23 pour les faces des petits côtés et 22, 24 pour les faces des grands côtés, recouvertes de rainures et de bossages longitudinaux. Le terme de rainures désigne la partie creuse entre deux bossages, le terme de bossage désigne la partie en relief entre deux rainures. Les rainures ou bossages sont dits longitudinaux en ce sens qu'ils suivent une ligne parallèle fictive située à égale distance des quatre parois et constituant une ligne axiale du guide. Cette ligne peut être courbe ou droite. Des exemples possibles de formes de rainures et bossages associés ont été représentés figure 2. Les bossages sont désignés sous le n° de référence générique 25 et les rainures par le n° 26. Les figures 2a à 2e représentent ainsi des bossages dont la section droite s'apparente à un trapèze, un triangle, un rectangle, une ondulation ou une forme mixte. Pour cette dernière, le sommet du bossage est un segment de droite et les deux côtés latéraux ont des formes courbes.

Ces dernières formes se rencontreront le plus fréquemment car les formes anguleuses sont plus facilement sujettes aux défauts, notamment par manque de matière.

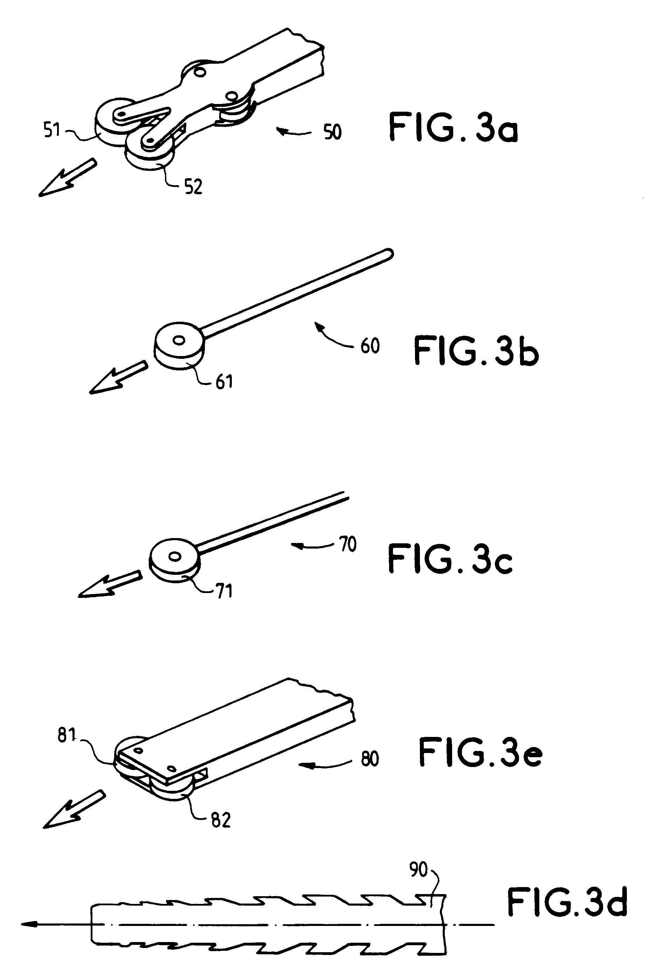

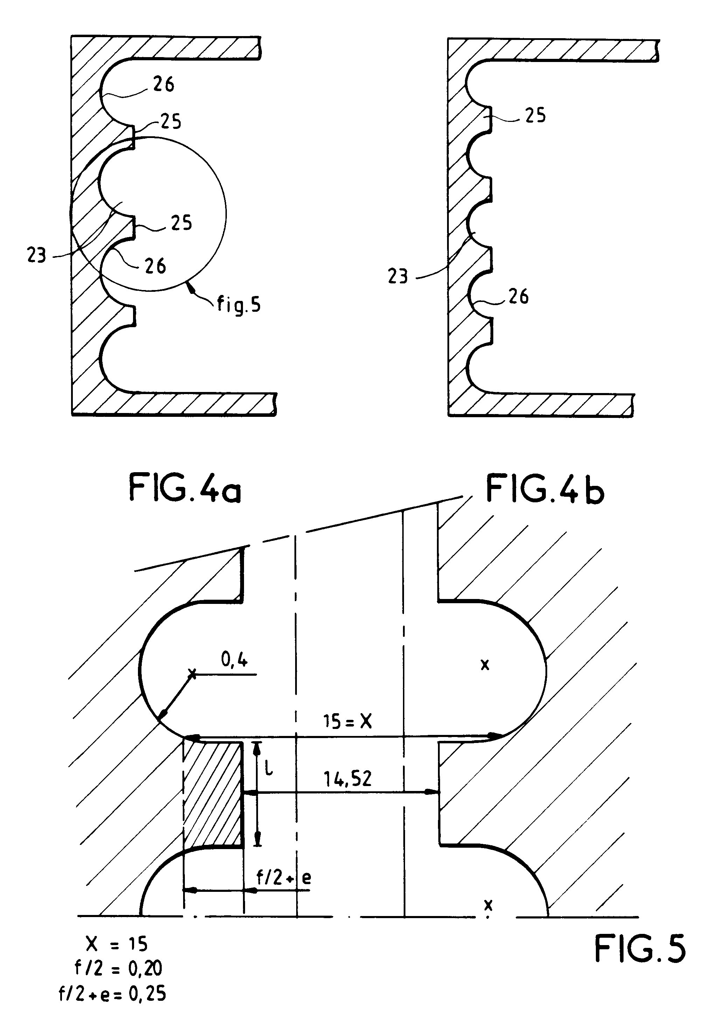

Ces bossages 25 seront ensuite écrasés ou écrouis ou abrasés ou brochetés à l'aide d'outils connus dans l'art et représentés figures 3a à 3e. Les formes représentées sur ces figures conviennent pour le conformage des petits côtés de guide d'onde rectangulaires. C'est pour cette raison que les outils sont représentés sur ces figures sous forme de galets. Cette forme n'est, bien entendu, pas limitative. En particulier si l'on avait affaire à des guides circulaires, les outils auraient une forme sphérique. A l'exception de la broche 90 représentée figure 3d qui n'agit que par enlèvement de la matière des bossages, les autres outils 50, 60, 70, 80 agissent par déformation de la forme des bossages, à l'aide de galets 51, 52, 61 comme représenté figures 3a et 3b, ou par déformation et abrasion comme représenté figures 3c et 3e à l'aide de pastilles abrasives 71, 81, 82. Toutes ces techniques sont bien connues dans l'art et les outils ainsi que leurs modes de traction ou de poussée ne seront pas plus avant décrits. Deux exemples particuliers de réalisation seront maintenant décrits en référence aux figures 4a et b, qui représentent chacune une forme grossie d'une coupe transversale du petit côté d'un guide d'onde rectangulaire. Les formes sont représentées telles qu'elles sont issues de fonderie. Les petits côtés droit et gauche ont des formes symétriques par rapport à un plan perpendiculaire aux grands côtés du guide.

Dans les deux cas la cote à obtenir entre les deux petits côtés est égale à 15 mm ± 0,02 mm.

L'exemple est relatif à un cas où la cote finale est obtenue par écrouissage.

La valeur maximum de la dimension obtenue ne doit pas être supérieure à 15,02 mm. La cote minimum donnée au fondeur pour la distance séparant les sommets de bossage en vis à vis sur chacun des petits côtés sera de 14,52 mm. Cette cote est calculée comme suit.

On part de 15,02 cote maximum. On ôte deux fois 0,05 = e soit 0,10 parcequ'il faut disposer au minimum de 0,05 mm de matière à écrouir. On ôte encore deux fois $0,2 = \dfrac{f}{2}$ soit 0,4 mm ce qui pour cette dimension et cette forme correspond à la précision JS 14. Dans ces conditions les bossages de la pièce tels qu'issus de fonderie seront distants l'un de l'autre au minimum de 14,52 et au maximum de 14,52 + 0,4 = 14,92. On va s'intéresser maintenant à ce qui se passe lorsque la pièce est livrée à la côte minimum de 14,52. Lors du passage de l'outil, la matière constituant les bossages va être repoussée dans les rainures. Il faut donc que les rainures aient un volume suffisant pour accueillir la matière ainsi repoussée. Dans l'exemple particulier de réalisation les sections droites des rainures ont des formes de demi-cercle. Elles sont représentées plus en détail figure 5. La hauteur du bossage est l.

Lorsque la cote séparant deux bossages en vis à vis est au minimum, soit 14,52, la largeur de bosse qui va être écrouie à la dimension $\dfrac{f}{2}$ + e. La surface de bossage qui va être écrouie a sensiblement la valeur $(\dfrac{f}{2}$ + e) l. Si R désigne la valeur du rayon de la rainure, les centres des cercles définissant la rainure étant situés à 15 mm = X l'un de l'autre, la surface d'une rainure est $\pi\dfrac{R^2}{2}$ . Les dimensions R et l doivent vérifier la relation

$$\frac{\pi R^2}{2} > (\frac{f}{2} + e)l \quad (1)$$

Dans le cas de la réalisation on a pris des rainures de rayons 0,4 , figure 4a et de rayon 0,3, figure 4b.

Les hauteurs I étant quant à elles égales à 0,3 environ et 0,2 mm respectivement. On remarque de plus que la figure 4a comporte 3 bossages 25 et 4 rainures 26, la figure 4b, 4 bossages 25 et 5 rainures 26. Dans les deux cas la relation 1 est vérifiée puisque

$$\pi \frac{0,4 \text{x} 0,4}{2} > 0,3 \text{x} (0,2 + 0,05)$$

soit $\pi$ x 0,08 > 0,075 *Figure* 4a

et $\pi \frac{0,3 \text{x} 0,3}{2} > 0,2(0,2 + 0,05)$

$\pi$ x 0,045 > 0,05 *Figure* 4b

Le calcul ci-dessus est fait sans tenir compte du fait que la matière écrouie se comprime. Le fait que chacun des bossages soit entouré de deux rainures et que de ce fait il y ait une rainure supplémentaire, facilite les opérations de mise à la cote, et rend plus facile la réalisation de la pièce de fonderie. On voit en effet que dans le cas d'un guide rectangulaire le raccord entre le petit côté et le grand côté se fait sur une rainure. Dans le cas d'un guide circulaire, il y aurait du fait de la symétrie autant de rainures que de bossages.

## Revendications

1. Procédé de fabrication d'un guide d'onde ou d'une partie d'un guide d'onde à partir d'une pièce de fonderie, le guide d'onde comportant au moins une partie le long de laquelle deux parties de parois du guide d'onde, une première et une seconde doivent rester parallèles entre elles écartées l'une de l'autre d'une distance X avec un intervalle de tolérance x l'intervalle de tolérance de fonderie sur la dimension X étant f, procédé caractérisé en ce que l'on conforme la pièce issue de fonderie avec l'une au moins de ses première ou seconde parois comportant des reliefs et en ce que l'on réduit ces reliefs par passe d'un outil poussé ou tracté parallèlement aux premières et secondes parois .

2. Procédé selon la revendication 1, caractérisé en ce que l'outil de réduction des reliefs est un outil de repoussement..

3. Procédé selon la revendication 1, caractérisé en ce que l'outil de réduction des reliefs est un outil d'écrouissage.

4. Procédé selon la revendications 1, caractérisé en ce que l'outil de réduction des reliefs est une broche.

5. Procédé selon la revendication 1, caractérisé en ce que les reliefs sont constitués par des bossages longitudinaux dont les lignes longitudinales sont parallèles aux premières et secondes parois.

passage de l'outil

FIG.1

Trapézoïdal   Triangulaire   Rectangulaire   Ondulation   Composition

a          b          c          d          e

FIG.2

FIG.3a

FIG.3b

FIG.3c

FIG.3e

FIG.3d

EP 0 599 693 A1

FIG.4a          FIG.4b

X = 15
f/2 = 0,20
f/2+e= 0,25

FIG.5

Office européen
des brevets

**RAPPORT DE RECHERCHE EUROPEENNE**

Numero de la demande

EP 93 40 2775

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | DE-B-10 49 454 (SIEMENS & HALSKE AG) <br> * le document en entier * <br> --- | 1,2 | H01P11/00 |
| A | SOVIET INVENTIONS ILLUSTRATED <br> Section Ch, Week B02, 21 Février 1979 <br> Derwent Publications Ltd., London, GB; <br> Class M24, Page 29, AN 03750B/02 <br> & SU-A-594 192 (BESPALKO ET AL.) 2 Février 1978 <br> * abrégé * <br> --- | 1 | |
| A | FR-A-2 536 590 (THOMSON-CSF) <br> * le document en entier * <br> --- | 1,2 | |
| A | FR-A-2 470 455 (KABEL-UND METALLWERKE GUTEHOFFNUNGSHÜTTE AG) <br> * page 3, ligne 9 - ligne 40; figures 2,3 * <br> --- | 1 | |
| A | EP-A-0 082 519 (KAWASAKI JUKOGYO K.K.) <br> * colonne 1, ligne 27 - colonne 2, ligne 3 * <br> * colonne 7, ligne 10 - ligne 13; figures 1,5 * <br> ----- | 1,3 | **DOMAINES TECHNIQUES RECHERCHES (Int.Cl.5)** <br> H01P <br> B23P |

Le présent rapport a été établi pour toutes les revendications

| Lieu de la recherche | Date d'achèvement de la recherche | Examinateur |
|---|---|---|
| LA HAYE | 10 Février 1994 | Den Otter, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)